# EUROPEAN PATENT SPECIFICATION

(11) **EP 3 338 975 B1**
(45) Date of publication and mention of the grant of the patent: **05.02.2020**
(21) Application number: 17206803.3
(22) Date of filing: 12.12.2017
(51) Int. Cl.: B27D 5/00, B29C 63/00, F16K 3/24, F16K 3/34

(54) **MACHINE FOR EDGEBANDING PANELS OF WOOD OR THE LIKE**
MASCHINE ZUR KANTENLEIMUNG VON PLATTEN AUS HOLZ ODER DERGLEICHEN
MACHINE DE PLACAGE DE PANNEAUX EN BOIS OU MATÉRIAU SIMILAIRE

(30) Priority: 20.12.2016 IT 201600128908
(43) Date of publication of application: 27.06.2018
(73) Proprietor: BIESSE S.p.A., 61100 Pesaro (IT)
(72) Inventor: FORLANI, Filippo, 61121 PESARO (IT); SALTARELLI, Roberto, 61122 PESARO (IT)
(74) Representative: Manconi, Stefano

(56) References cited:
- EP-A1- 0 457 132
- EP-A2- 1 375 986
- WO-A1-98/02682
- GB-A- 2 081 642
- US-A- 2 014 314
- US-A- 2 541 176
- US-A- 4 222 812
- US-A1- 2003 042 449

## Description

The invention relates to a machine for edgebanding panels of wood or the like according to the preamble of claim 1. Such a machine is disclosed by document US 4 222 812 A.

In particular, the invention relates to a machine for edgebanding panels of wood or the like with a finishing edge without glue, which is defined by two overlapping layers of different plastic materials, or with a finishing edge provided with a layer of glue.

The machine comprises an edgebanding assembly; and a moving device to move the panels in succession through the edgebanding assembly and to allow the edgebanding assembly to apply the finishing edge along at least part of a side profile of each panel.

The edgebanding assembly comprises a support plate defining a support surface for the finishing edge; a feeding device, which is mounted on the support plate so as to feed a hot gas, in particular a hot gas under pressure, onto the finishing edge and activate the layer of glue or one of the layers of plastic material; a pressing device, which is mounted on the support plate so as to stabilize the finishing edge on the side profile of the panels; and a guide device, which is mounted on the support plate so as to guide the finishing edge along the support surface.

The gas is fed to the feeding device starting from a containing tank and through a heating device, which is designed to heat the gas at a given temperature.

The edgebanding assembly further comprises a detection device to measure the gas flow rate fed to the heating device and, hence, to the feeding device; and a manually operated adjusting device to allow operators to selectively control the gas flow rate fed to the feeding device depending on the actual gas flow rate measured by the detection device.

Known machines for edgebanding panels of wood or the like of the type described above are affected by some drawbacks, which are mainly due to the fact that the manual operation of the adjusting device does not allow operators to adjust the gas flow rate fed to the feeding device with precision and/or with the flexibility that is currently needed by industrial productions.

It is an object of the present invention to provide a machine for edgebanding panels of wood or the like, which is designed to eliminate the aforementioned drawbacks in a straightforward, relatively low-cost manner.

According to the present invention, there is provided a machine for edgebanding panels of wood or the like according to the appended claims.

The invention will now be described with reference to the accompanying drawings, which show a non-limiting embodiment thereof, wherein:
figure 1 is a schematic perspective view, with parts removed for greater clarity, of a preferred embodiment of the edgebanding machine according to the present invention;
figure 2 schematically shows the operating principle of the machine of figure 1.
figure 3 is a schematic side view, with sectional parts, of a detail of figure 2; and
figure 4 is a schematic perspective view of a detail of figure 3.

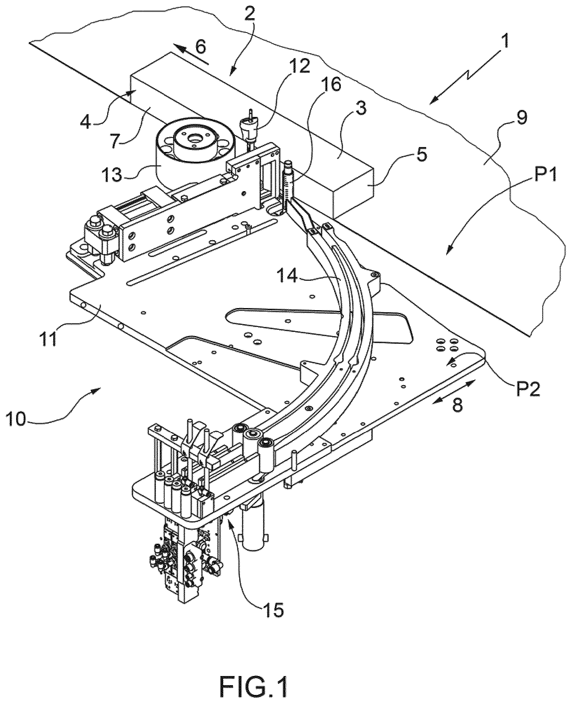

With reference to figure 1, number 1 indicates, as a whole, a machine for edgebanding panels 2 of wood or the like.

Each panel has two main faces 3, which are parallel to and opposite one another, and is delimited by a side profile 4, which extends between the main faces 3 and comprises, in the case in point, two smaller side faces 5, which are parallel to one another and perpendicular to a horizontal direction 6, and two smaller side faces 7, which are parallel to one another and perpendicular to a horizontal direction 8, which is transverse to the direction 6.

The machine 1 comprises a known moving device 9, which defines a substantially horizontal support surface P1 for the panels 2 and is configured to move the panels 2 in succession in the direction 6.

The machine 1 further comprises an edgebanding assembly 10, which is configured to apply a finishing edge (not shown herein) on the side profile 4 of the panels 2.

The finishing edge (not shown herein) is a finishing edge without glue, which is defined by two overlapping layers of different plastic materials, or a finishing edge provided with a layer of glue.

The edgebanding assembly 10 comprises a support plate 11 defining a support surface P2 for the finishing edge (not shown herein); a feeding device 12, which is mounted on the support plate 11 so as to feed a hot gas, in particular a hot gas under pressure, onto the finishing edge (not shown herein) and activate the layer of glue or one of the layers of plastic material; a pressing roller 13, which is mounted on the plate 11 so as to stabilize the finishing edge (not shown herein) on the side profile 4; and a guide device 14, which is mounted on the plate 11 so as to guide the finishing edge (not shown herein) along the surface P2.

The assembly 10 further comprises an unwinding device 15, which is mounted on the plate 11 so as to unwind the finishing edge (not shown herein) from a reel (not shown herein); and a cutting device 16, which is mounted on the plate 11 so as to separate the finishing edge (not shown herein) from a band of the reel (not shown herein).

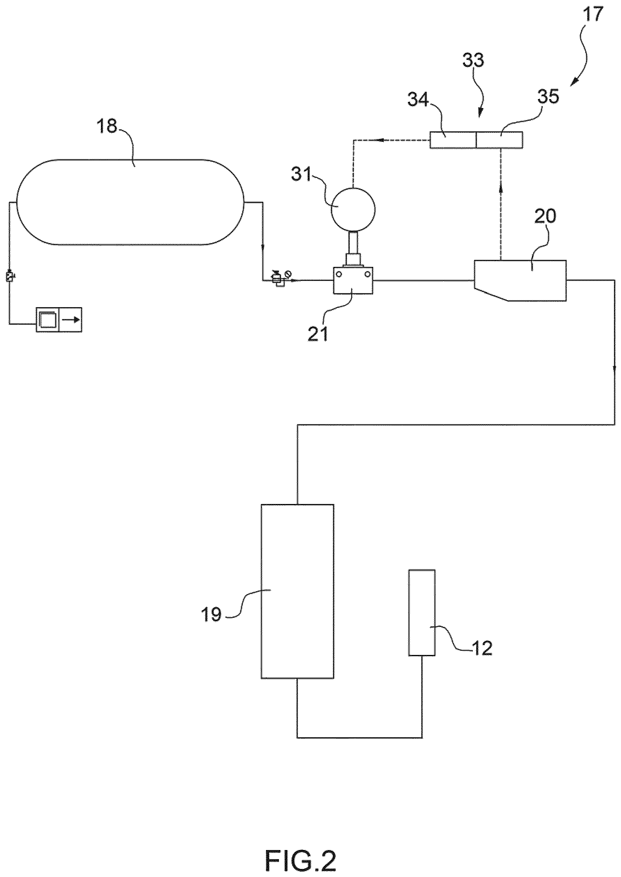

According to figure 2, the edgebanding assembly 10 comprises, furthermore, a pneumatic circuit 17 to feed the hot gas to the device 12.

The circuit 17 comprises a tank 18 containing the gas at room temperature; a heating device 19 to heat the gas at the desired temperature; and a detection device 20, which is mounted between the tank 18 and the device 19 so as to measure the gas flow rate fed from the tank 18 to the device 19 and, hence, to the device 12.

According to a variant that is not shown herein, the detection device 20 is mounted between the heating device 19 and the feeding device 12.

The gas flow rate fed from the tank 18 to the device 19 is selectively controlled by a motor-driven valve 21, which is mounted between the tank 18 and the device 20.

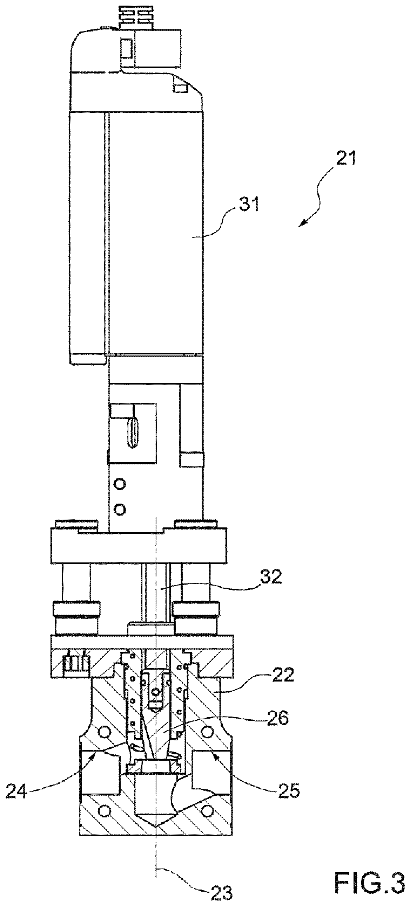

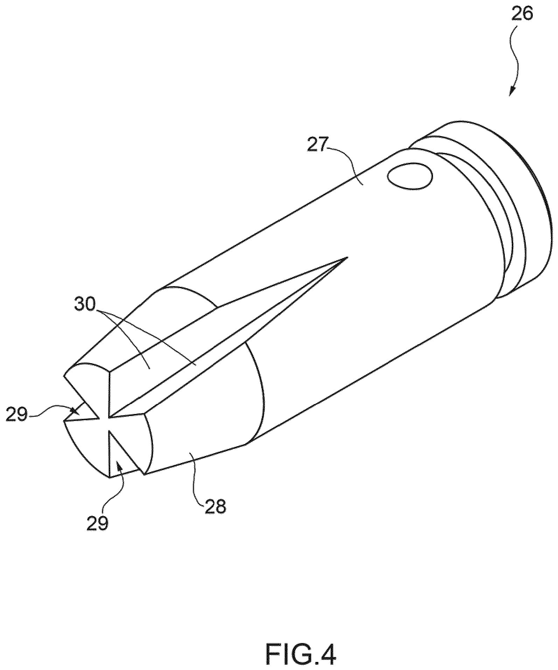

With reference to figures 3 and 4, the valve 21 comprises a valve body 22 having a longitudinal axis 23; a radial hole 24 to let the gas into the valve body 22; and a radial hole 25 to let the gas out of the valve body 22.

The valve 21 further comprises a shutter 26, which is coupled to the valve body 22 in a sliding manner so as to move parallel to the axis 23 between a closing position and an opening position to close and open the hole 24.

The shutter 26 comprises a substantially cylindrical portion 27, which is engaged in the valve body 22 in a sliding manner; and an end portion 28 with the shape of a truncated cone.

The shutter 26 is further provided with at least one recess 29 (in the case in point, three recesses 29 uniformly distributed around the axis 23), which is obtained on an outer surface of the shutter 26 starting from a free end of the portion 28.

The recess 29 extends along the portion 28 and at least part of the portion 27, faces the hole 24 and is substantially V-shaped.

The recess 29 is delimited by two substantially flat side flanks 30 and has, perpendicularly to the axis 23, a cross section that decreases along the axis 23 starting from a free end of the shutter 26.

The shutter 26 is axially moved between its opening and closing positions by an operating motor 31 having an output shaft 32, which is mounted coaxially to the axis 23 and is coupled to the shutter 26 by means of a screw-nut coupling.

In use, the shutter 26 is moved by the motor 31 along the vale body 22 so as to selectively control the gas flow rate fed to the heating device 19 and, hence, to the feeding device 12 depending on the axial position of the portion 28 shaped like a truncated cone and of the recess 29.

The machine 1 further comprises an electronic control unit 33, which is connected to the detection device 20 and to the operating device 31 so as to selectively control the operation of the motor 31 depending on a signal coming from the device 20.

In other words, as the gas flow rate fed to the device 12 can change, for example, upon variation of the temperature of the gas and/or of the temperature on the outside, the device 20 and the electronic control unit 33 allow operators to carry out a feedback control of the axial position of the shutter 26, so as to always keep the gas flow rate fed to the device 12 constant.

The electronic control unit 33 is further provided with a memory 34 to store a plurality of values of the gas flow rate, each associated with a relative type of finishing edge (not shown herein).

The electronic control unit 33 further comprises a selector device 35 to select the type of finishing edge (not shown herein) and is configured to control the selective operation of the motor 31 depending on the type of finishing edge (not shown herein) selected by the device 35.

The presence of the operating motor 31 and the connection of the electronic control unit 33 to the detection device 20 and to the operating motor 31 allow to control, with utmost precision and with great flexibility, the gas flow rate fed to the heating device 19 and, hence, to the feeding device 12.

## Claims

1. A machine for edgebanding panels (2) of wood or the like, each having two main faces (3), which are parallel to and opposite one another, and a side profile (4) extending between the main faces (3), the machine comprising a support surface (P1) for at least one panel (2); an edgebanding assembly (10) to apply a finishing edge along at least part of the side profile (4) of the panel (2); and an operating device (6) to move the panel (2) and the edgebanding assembly (10) relative to one another in at least one direction (6) that is parallel to the support surface (PI); the edgebanding assembly (10) comprising a feeding assembly (12) to feed a hot gas, in particular a hot gas under pressure, onto the finishing edge and/or onto the side profile (4) of the panel (2), a feeding valve (21) to feed the gas to the feeding device (12), and a heating device (19) to heat the gas fed through the feeding valve (21) and to the feeding device (12); the feeding valve (21) comprising a valve body (22), an inlet (24) to let the gas into the valve body (22), an outlet (25) to let the gas out of the valve body (22), and a shutter (26), which is movable between an opening position and a closing position to open and close the feeding valve (21); and being **characterized in that** it comprises, furthermore, an operating motor (31) to move the shutter (26) between its opening and closing positions, a detection device (20) to measure the gas flow rate fed, through the feeding valve (21), to the feeding device (12), and an electronic control unit (22) to control the selective operation of the operating motor (31) depending on a signal coming from the detection device (20).

2. A machine according to claim 1 and comprising an electronic control unit (33), which is provided with a memory (34) to store a plurality of gas flow rate values, each associated with a relative type of finishing edge, has a selector device (35) to select the type of finishing edge, and is designed to control the selective operation of the operating motor (31) depending on the type of finishing edge selected by the selector device (35).

3. A machine according to claim 1 or 2, wherein the heating device (19) is mounted between the feeding valve (21) and the feeding device (12).

4. A machine according to claim 1 or 2, wherein the heating device (19) is mounted between the detection device (20) and the feeding device (12).

5. A machine according to claim 1 or 2, wherein the detection device (20) is mounted between the heating device (19) and the feeding device (12).

## Patentansprüche

1. Maschine zur Kantenleimung von Platten (2) aus Holz oder dergleichen jeweils mit zwei Hauptflächen (3), die parallel und gegenüberliegend zueinander sind sowie mit einem Seitenprofil (4), das sich zwischen den Hauptflächen (3) erstreckt; die Maschine umfasst eine Tragfläche (P1) für wenigstens eine Platte (2); eine Kantenleimungseinheit (10) zum Aufbringen einer Finishingkante entlang wenigstens eines Teiles des Seitenprofiles (4) der Platte (2); eine Betätigungseinheit (6) zum Bewegen der Platte (2) sowie der Kantenleimungseinheit (10) relativ zueinander in wenigstens einer Richtung (6) parallel zur Tragfläche (P1); die Kantenleimungseinheit (10) umfasst eine Zufuhreinheit (12) zum Zuführen heißen Gases, insbesondere eines druckfreien Gases, auf die Finishingkante und/oder auf das Seitenprofil (4) der Platte (2), ein Zufuhrventil (21) zum Zuführen des Gases zur Zufuhreinheit (12), und eine Heizvorrichtung (19) zum Beheizen des durch das Zufuhrventil (21) sowie zur Zufuhreinheit (12) zugeführten Gases; das Zufuhrventil (21) umfasst einen Ventilkörper (22), einen Einlass (24) zum Einlassen des Gases in den Ventilkörper (22), einen Auslass (25) zum Auslassen des Gases aus dem Ventilkörper (22) sowie einen Verschluss (26), der zwischen einer geöffneten und einer geschlossenen Position beweglich ist, um das Zufuhrventil (21) zu öffnen und zu schließen, **dadurch gekennzeichnet, dass** ein Antriebsmotor (31) vorgesehen ist, um den Verschluss (26) zu bewegen zwischen dessen Öffnungs- und Schließpositionen, einen Detektor (20) zum Messen des Gasdurchsatzes, der durch das Zufuhrventil (21) und die Zufuhreinheit (12) hindurchgeführt wird sowie einen elektrischen Regler (22) zum Regeln des selektiven Betriebes des Antriebsmotors (31), abhängig von einem Signal vom Detektor (20).

2. Maschine nach Anspruch 1, umfassend einen elektronischen Regler (33), ausgestattet mit einem Speicher (34) zum Abspeichern einer Mehrzahl von Gasdurchsatzwerten, jeweils begleitet von einem entsprechenden Typ einer Kantenleimungseinheit, mit einem Selektor (35) zum Auswählen des Typus der Kantenleimung, gestaltet zum Regeln des ausgewählten Betriebs des Antriebsmotors (31), abhängig vom Typus der Kantenumleimung, ausgewählt vom Selektor (35).

3. Maschine nach Anspruch 1 oder 2, bei welcher die Heizvorrichtung (19) zwischen dem Zufuhrventil (21) und der Zufuhreinheit (12) angeordnet ist.

4. Maschine nach Anspruch 1 oder 2, wobei die Heizvorrichtung (19) zwischen dem Detektor (20) und der Zufuhreinheit (12) angeordnet ist.

5. Maschine nach Anspruch 1 oder 2, wobei der Detektor (20) zwischen der Heizvorrichtung (19) und der Zufuhreinheit (12) angeordnet ist.

## Revendications

1. Machine pour plaquer des panneaux (2) en bois ou similaire, ayant chacun deux faces principales (3) qui sont parallèles et opposées l'une par rapport à l'autre, et un profilé latéral (4) s'étendant entre les faces principales (3), la machine comprenant une surface de support (P1) pour le au moins un panneau (2) ; un ensemble de placage (10) pour appliquer un bord de finition le long d'au moins une partie du profilé latéral (4) du panneau (2) ; et un dispositif de commande (6) pour déplacer le panneau (2) et l'ensemble de placage (10) l'un par rapport à l'autre dans au moins une direction (6) qui est parallèle à la surface de support (P1) ; l'ensemble de placage (10) comprenant un ensemble d'alimentation (12) pour fournir un gaz chaud, en particulier un gaz chaud sous pression, sur le bord de finition et/ou sur le profilé latéral (4) du panneau (2), une valve d'alimentation (21) pour amener le gaz au dispositif d'alimentation (12), et un dispositif de chauffage (19) pour chauffer le gaz alimenté par la valve d'alimentation (21) et amené au dispositif d'alimentation (12) ; la valve d'alimentation (21) comprenant un corps de valve (22), une entrée (24) pour laisser entrer le gaz dans le corps de valve (22), une sortie (25) pour laisser sortir le gaz du corps de valve (22), et un obturateur (26) qui est mobile entre une position d'ouverture et une position de fermeture pour ouvrir et fermer la valve d'alimentation (21) ; et étant **caractérisée en ce qu'**elle comprend, en outre, un moteur de commande (31) pour déplacer l'obturateur (26) entre ses positions d'ouverture et de fermeture, un dispositif de détection (20) pour mesurer le débit de gaz amené, par la valve d'alimentation (21), au dispositif d'alimentation (12), et une unité de commande électronique (22) pour commander l'opération sélective du moteur de commande (31) en fonction d'un signal provenant du dispositif de détection (20).

2. Machine selon la revendication 1 et comprenant une unité de commande électronique (33) qui est prévue avec une mémoire (34) pour stocker une pluralité de valeurs de débit de gaz, chacune associée à un type relatif de bord de finition, a un dispositif de sélecteur (35) pour sélectionner le type de bord de finition, et est conçue pour commander l'opération sélective du moteur de commande (31) en fonction du type de bord de finition sélectionné par le dispositif de sélecteur (35).

3. Machine selon la revendication 1 ou 2, dans laquelle le dispositif de chauffage (19) est monté entre la valve d'alimentation (21) et le dispositif d'alimentation (12).

4. Machine selon la revendication 1 ou 2, dans laquelle le dispositif de chauffage (19) est monté entre le dispositif de détection (20) et le dispositif d'alimentation (12).

5. Machine selon la revendication 1 ou 2, dans laquelle le dispositif de détection (20) est monté entre le dispositif de chauffage (19) et le dispositif d'alimentation (12).
